Europäisches Patentamt

European Patent Office

Office européen des brevets

(11) Publication number: **0 266 002 B1**

(12) EUROPEAN PATENT SPECIFICATION

(45) Date of publication of patent specification: **12.02.92**  (51) Int. Cl.⁵: **B21C 37/12**, F16L 9/16

(21) Application number: **87202042.5**

(22) Date of filing: **23.10.87**

(54) **A method of manufacturing a tube having a smooth inner surface, and a tube obtained with that method.**

(30) Priority: **24.10.86 NL 8602677**

(43) Date of publication of application:
**04.05.88 Bulletin 88/18**

(45) Publication of the grant of the patent:
**12.02.92 Bulletin 92/07**

(84) Designated Contracting States:
**AT BE CH DE ES FR GB GR IT LI LU NL SE**

(56) References cited:
**CH-A- 629 401**
**FR-A- 2 410 202**
**US-A- 2 798 508**

(73) Proprietor: **DEC Holding B.V.
Ir. E.L.C. Schiffstraat 380
NL-7547 RD Enschede(NL)**

(72) Inventor: **Oonk, Herman Johan
Bastinglaan 20
NL-7548 AN Enschede(NL)**
Inventor: **Reiter, Ingo H.G.
Le Buisson Souef
F-89500 Villeneuve sur Yonne(FR)**

(74) Representative: **Schumann, Bernard Herman Johan et al
OCTROOIBUREAU ARNOLD & SIEDSMA
Sweelinckplein 1
NL-2517 GK The Hague(NL)**

Rank Xerox (UK) Business Services

## Description

The invention relates to a method for manufacturing a thin-walled tube with a smooth inner surface, according to which method at least one single strip of foil and a wire are simultaneously wound onto a mandrel in a helical manner, whereby overlapping zones of said foil material are adhered to one another with substantially their entire surface while enclosing said helically wound wire.

A method as set forth above is disclosed in FR-A-2410202.

The invention now focuses on a method for manufacturing a thin-walled tube with a smooth inner surface, according to which method a single strip of foil is wound at such a pitch that at least three wound layers of said single strip of foil overlap one another, said wire being lead in with respect to the width of said foil varying to one or more pitches, so determining between which layers the wire comes to lie in the wall of the formed tube. The strip of foil can consist for example of aluminium and the wire of steel, in which case a tube possessing a good heat resistance and good properties with respect to fire resistance is obtained, such that it meets the requirements of a high fire risk classification.

The advantage of the method accoring to the invention is also that it is easy to perform on the building site. In this respect, attention is drawn to the fact that the manufacture of a flexible and axially compressible tube by means of winding is per se known. In the axial compression of such a tube it is not, however, possible to prevent the inner surface obtaining a rough structure such that during the intended use for the guiding of air flows, considerable turbulences will occur, which is precisely an effect which the invention aims to avoid.

It will be apparent that the number of overlapping, wound layers can be selected on the basis of the relation between the width of the strip of foil and the pitch at which the strip is wound. Attention is drawn also to the fact that the lead-in position of the wire in the width direction of the strip of foil determines between which layers the wire comes to lie in the wall of formed tubes. At the one extreme for example, the wire can be situated such that in inward direction only one layer is present while the other layers extend outward; at the other extreme the wire can be situated such that it is covered on the outside by only one layer while all the other layers are located beneath the wire.

It is remarked that the word "mandrel" as used above should not be interpreted in its restricted sense of a cylindrical body, but can also include a construction comprising a number of freely revolving cylindrical rollers disposed at a pitch angle. The formed tube could be removed from a smooth mandrel using compressed air which, coming through openings in the cylinder surface, ensures an easy release of the tube from the mandrel. The mandrel comprising freely revolving cylindrical rollers does not entail the problem of tube release, but is on the other hand more complicated in construction.

The adhering of the overlapping zones of the strip of foil can be realized by arranging a processing station between a supply roll and the winding mandrel, where the strip of foil is provided with adhesive on at least one side.

The invention will now be elucidated with reference to the drawing. In the drawing:

Fig. 1 shows a device for the manufacture of a tube according to the invention;

Fig. 2 shows a side view, partially broken away, as according to II-II in fig. 1;

Fig. 3 shows the broken away part III as according to fig. 2;

Fig. 4 shows another embodiment of a device;

Fig. 5 shows a view corresponding with fig. 3, of a longitudinal section through the wall of the tube as in fi g. 4, according to V-V; and

Fig. 6 shows a cross section as according to fig. 3 of a tube in another embodiment.

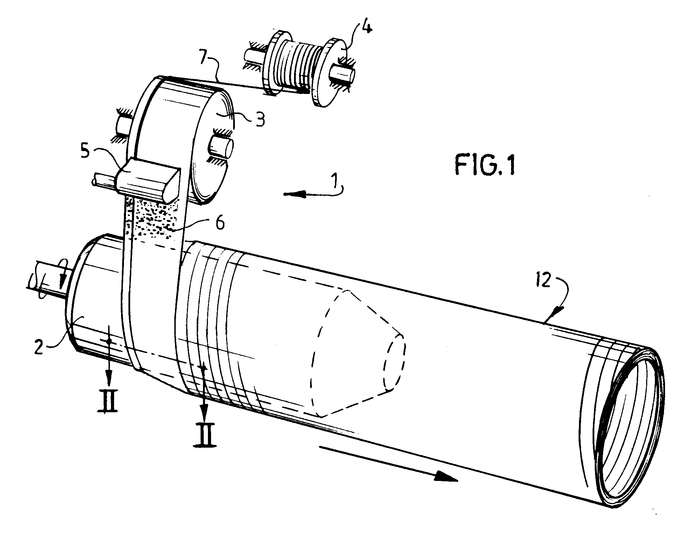

Fig. 1 shows in a very schematic form a device 1 for the manufacture of a thin-walled tube with a smooth inner surface. Device 1 comprises a rotary driven mandrel 2, a supply roll 3 for a strip of aluminium foil and a supply roll 4 for steel wire. The aluminium foil strip 3 and the steel wire 4 are together guided to a processing station 5, where the inner surface and/or the outer surface of the strip of foil 6 is provided with a layer of adhesive. From adhesive station 5, the strip of foil 6 with steel wire 7 is guided for winding to mandrel 2, where they are wound to form a tube in the manner shown.

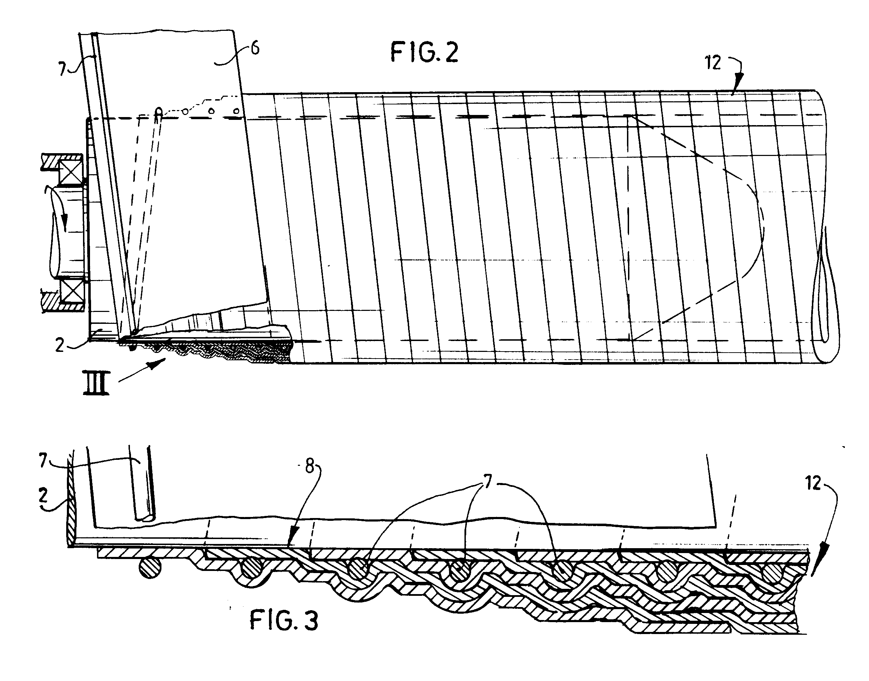

Fig. 2 shows the side view II-II from fig. 1. It will be apparent that the relation between the width of the foil and the winding pitch is selected such that in this case a total of six layers of foil lie on top of one another while enclosing the windings of steel wire 7. Not drawn is the thin adhesive layer, using which the overlapping zones of the strip of foil are adhered to one another substantially with the whole of their surface.

With reference to fig. 3, the detail III from fig. 2 on a larger scale, it is noted that the inner surface of the formed tube, generally designated with 8, is smooth.

It will also be apparent that fig. 3 only shows the lead-in zone and that the part situated more to the right shows a representative section of the wall of the tube eventually obtained.

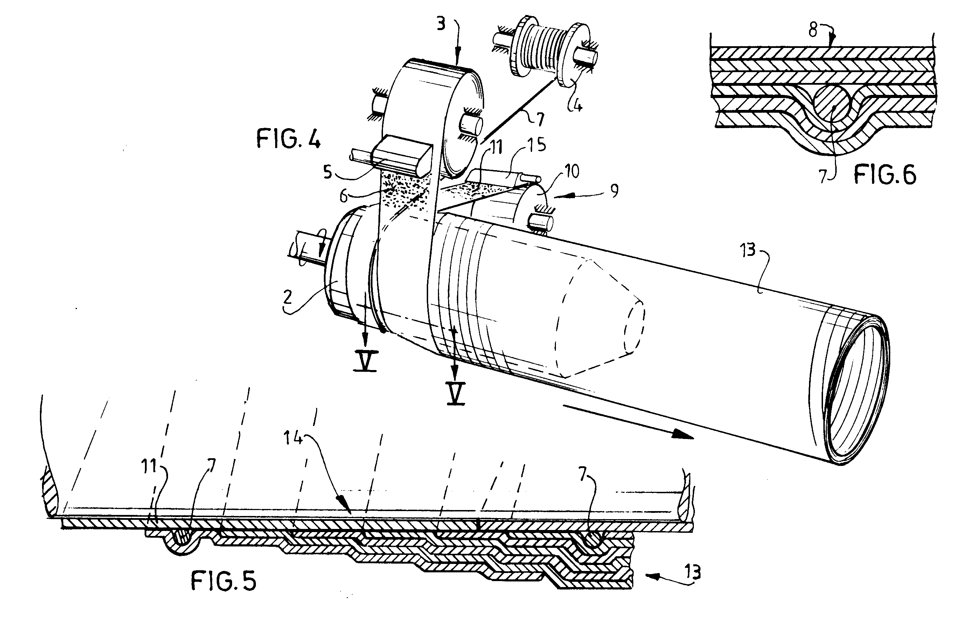

Fig. 4 shows a device 9 as a variant of device 1 according to fig. 1. This device comprises an extra supply roll 1 for a strip of aluminium foil 11 which can serve as base layer 11, as shown in fig. 5, on which the windings of steel wire 7 are located, over which the following layers of aluminium foil 6 are subsequently arranged in accordance with fig. 1.

The great difference between the tubes 12 and 13 obtained respectively with device 1 according to fig. 1 and with device 9 according to fig. 4 is that in the case of tube 12 (see fig. 3) the pitch between successive windings of the steel wire 7 has to be comparatively small, while in the case of tube 13 according to fig. 5 the distance between one another of successive windings of steel wire 7 can be relatively great, while nevertheless the inner surface 14 of tube 13 is completely smooth. It will be apparent that tube 13 is mechanically less strong than tube 3. The helically formed steel wire 7 here functions as reinforcement for the tube and provides it in great measure with its mechanical strength.

In order to adhere the aluminium foil 11 to the strip of foil 6, strip 11 is also guided through an adhesive station, indicated by 15. The winding pitch of the strip of foil 11 is selected in this example such that adjoining windings do not overlap one another but are located exactly up against each other.

In the embodiments described above, the position of steel wire 7 in relation to the strip of foil 3 is selected such that the winding pattern shown in fig. 3 is obtained. By moving the steel wire more to the right, another winding pattern can be obtained.

Fig. 6 shows a winding pattern obtained with a configuration in which steel wire 7 is located approximately in the centre of the strip of foil 6. It will be apparent after this that wire 7 can be placed as desired between each of two layers lying on one another.

Attention is drawn to the fact that other numbers of layers of aluminium foil can be also applied.

## Claims

1. A method for manufacturing a thin-walled tube with a smooth inner surface, according to which method at least one single strip of foil and a wire are simultaneously wound onto a mandrel in a helical manner, whereby overlapping zones of said foil material are adhered to one another with substantially their entire surface while enclosing said helically wound wire, characterized in that said single strip of foil is wound at such a pitch that at least three wound layers of said single strip of foil overlap one another, said wire being lead in with respect to the width of said foil varying to one or more pitches, so determining between which layers the wire comes to lie in the wall of the formed tube.

2. A method according to claim 1, wherein a second strip of foil is helically wound on said mandrel first, its side-edge being in abutting relationship.

## Revendications

1. Procédé de fabrication d'un tube à paroi mince et à surface intérieure lisse, procédé selon lequel on enroule simultanément sur un mandrin, à la façon hélicoïdale, un unique feuillard et un fil métallique, ce par quoi les zones, qui se recouvrent, dudit matériau constituant le feuillard adhèrent l'une à l'autre par sensiblement toute leur surface tout en enclosant ledit fil métallique enroulé à la façon hélicoïdale, procédé caractérisé par le fait que l'on enroule l'unique feuillard à un pas tel qu'au moins trois couches enroulées dudit feuillard unique se recouvrent l'une l'autre, ledit fil métallique étant introduit de façon que la largeur dudit feuillard représente un ou plusieurs pas, déterminant ainsi entre quelles couches le fil métallique vient reposer dans la paroi du tube formé.

2. Procédé selon la revendication 1, dans lequel on enroule hélicoïdalement tout d'abrod un second feuillard sur ledit mandrin, son bord latéral étant en relation de butée.

## Patentansprüche

1. Verfahren zum Herstellen eines dünnwandigen Rohres mit einer glatten inneren Oberfläche, wobei zumindest ein einziger Folienstreifen und ein Draht gleichzeitig in Spiralform auf einen Dorn gewickelt werden, wobei die sich überlappenden Bereiche des Folienmaterials mit im wesentlichen ihrer gesamten Oberfläche aneinandergeklebt werden und dabei den spiralförmig gewickelten Draht umschließen, dadurch gekennzeichnet, daß der einzige Folienstreifen mit einer derartigen Steigung gewickelt wird, daß sich zumindest drei gewickelte Folienlagen des einzigen Folienstreifens gegenseitig überlappen, wobei der Draht im Bezug auf die Breite des Folienstreifens um eine oder mehr Windungen variierend eingeführt wird, wodurch bestimmt wird, zwischen welchen Lagen der Draht in der Wand des geformten Rohres zu liegen kommt.

2. Verfahren nach Anspruch 1, dadurch gekennzeichnet, daß zuerst ein zweiter Folienstreifen spiralförmig auf den Dorn aufgewickelt wird, wobei dessen Seitenkanten auf Stoß gegeneinander anliegen.

FIG.1

# FIG. 2

# FIG. 3

FIG.4

FIG.5

FIG.6